Europäisches Patentamt

(19) European Patent Office

Office européen des brevets

(11) Numéro de publication: **0 131 484**
**B1**

(12) **FASCICULE DE BREVET EUROPÉEN**

(45) Date de publication du fascicule du brevet:
04.11.87

(21) Numéro de dépôt: **84401149.4**

(22) Date de dépôt: **05.06.84**

(51) Int. Cl.⁴: **C 08 J 5/12,** B 29 D 3/02,
B 32 B 5/00

(54) **Matériau composite polymère thermoplastique allégé polymère thermodurcissable et ses procédés de fabrication.**

(30) Priorité: **24.06.83 FR 8310486**

(43) Date de publication de la demande:
**16.01.85 Bulletin 85/3**

(45) Mention de la délivrance du brevet:
**04.11.87 Bulletin 87/45**

(84) Etats contractants désignés:
**DE FR GB NL**

(56) Documents cité:
**DE-A-1 005 727
DE-A-1 494 109
DE-A-2 051 813
GB-A-2 017 119**

(73) Titulaire: **ATOCHEM, 4 & 8, Cours Michelet La
Défense 10, F-92800 Puteaux (FR)**

(72) Inventeur: **Ollivier, Jean- Paul, 25, Rue de Crimée,
F-75019 Paris (FR)**
Inventeur: **Vinatier, Bernard, 14, Rue des Ormes,
F-60580 Coye la Foret (FR)**

(74) Mandataire: **Foiret, Claude, ATOCHEM
Département Propriété Industrielle, F-92091 Paris
la Défense 10 Cédex 42 (FR)**

**0 131 484**

## Description

La présente invention concerne un matériau composite unitaire nouveau à structure homogène constitué de polymère thermoplastique allégé renforcé de polymère thermodurcissable. L'invention concerne également les procédés de fabrication.

Par opposition aux thermoplastiques expansés qui sont des produits alvéolaires de basse masse volumique, on entend présentement par thermoplastique allégé la catégorie de produits alvéolaires dont les propriétés mécaniques se rapprochent le plus de celles du produit compact correspondant. La masse volumique des thermoplastiques allégés de l'invention est supérieure à 0,15 g/cm³.

Des matériaux composites constitués de matériaux expansés renforcés de polymères thermodurcissables sont connus, mais dans tous les cas, quand ils sont techniquement réalisables, il ne peut s'agir que de matériaux à structure hétérogène. Ces matériaux sont obtenus de deux façons: l'une par réticulation directe de la résine thermodurcissable sur le matériau expansé, l'autre par collage c'est-à-dire par utilisation d'un matériau intermédiaire entre les deux principaux constituants.

L'utilisation de résines polyesters pour la préparation directe de couches protectrices sur des pièces en polystyrène expansé est connue. Ce procédé par réticulation directe, comme d'ailleurs signalé dans le brevet français 1 480 638, présente un inconvénient majeur: le matériau expansé est attaqué par les résines polyesters usuelles. En effet le monomère libre contenu dans la résine thermodurcissable joue le rôle de solvant et attaque les cellules du matériau expansé, la propagation de cette attaque entraînant la destruction de ce matériau expansé et empéchant ainsi la réalisation d'un matériau composite industriellement valable. Pour remédier à cet inconvénient, il a été proposé dans le brevet français 1 085 567 d'appliquer sur les mousses, avant application de la résine thermodurcissable une couche de matière qui d'une part n'attaque pas le matériau expansé et d'autre part n'est pas attaquée par les résines thermodurcissables. Outre que ce procédé est peu pratique et lent, le produit obtenu présente un manque d'unité dû à la présence de ce corps étranger intermédiaire. Ce même manque d'unité se retrouve lorsqu'on utilise un moyen de collage, qui est également un corps intermédiaire, pour unir un matériau thermoplastique expansé ou allégé à un matériau thermodurcissable. Ce manque d'unité laisse les interfaces sensibles à tous les phénomènes susceptibles de provoquer le décollement. On peut dire que l'emploi d'un moyen intermédiaire ne permet pas d'obtenir un composite unitaire mais une simple juxtaposition d'éléments de matières plastiques dont la structure finale est hétéogène.

On a tenté de pallier, au moins en partie, les inconvénients des techniques précédentes dans le brevet français 1 480 638. Selon ce brevet on polymérise directement une résine polyester sur un matériau de polystyrène expansé après avoir remplacé la majorité du monomère solvant du polystyrène contenu dans le polyester par un éther allylique d'une N-méthylolurée non solvant du polystyrène. Mais là encore seul un composite non unitaire d'où hétérogène, peut être obtenu, la liaison entre les deux composants ne pouvant être que mécanique. En effet la résine polyester ne possédant plus de moyen d'action directe sur le polystyrène lui-même, ne peut que s'infiltrer et réticuler dans les pores du matériau expansé ne provoquant ainsi qu'un accrochage sans liaison intime entraînant la production d'un produit aux propriétés mécaniques limitées.

Contrairement aux produits connus, la présente invention concerne un véritable matériau composite unitaire nouveau à structure homogène, les éléments étant étroitement soudés les uns aux autres. Ce matériau composite nouveau possédant au moins une face externe de polymère thermodurcissable et une couche de polymère thermoplastique allégé est caractérisé en ce que les deux polymères sont unis l'un à l'autre sur toute leur interface grâce à un monomère diluant la résine thermodurcissable et solvant du polymère allégé dont la matière de surface externe à unir possède une masse volumique voisine de celle de la composition de base ayant servi à sa fabrication, monomère qui lors de la réticulation de la résine thermodurcissable provoque par sa polymérisation un alliage étroit de toute l'interface des deux polymères à unir. L'interface polymère thermodurcissable - polymère allégé thermoplastique se trouve sous forme d'un alliage tel qu'on peut se le représenter après par exemple un mélange à l'état fondu ce matériaux compatibles. Cette forme de liaison des composants permet de déclarer unitaire et à structure homogène le matériau composite par opposition à un matériau dit composite à structure hétérogène qui peut être obtenu par exemple par collage, où dans ce dernier cas les interfaces ne présentant pas de zone de transition sont nettement marquées et vulnérables.

Un tel matériau composite qui n'a pu être obtenu antérieurement du fait de la destruction du matériau expansé ou allégé de base par le monomère solvant est maintenant réalisable grâce à la structure de la surface à unir de ce matériau expansé par rapport à l'âme. Selon l'invention la matière de la surface à unir du matériau expansé doit être de masse volumique voisine de celle de la composition de base ayant servi à la fabrication dudit matériau allégé. Ceci signifie, qu'à la limite, la surface externe à unir peut se présenter sensiblement sous forme non allégée, le coeur du matériau étant allégé. De tels matériaux allégés appelés parfois à surface lisse ou à peau c'est-à-dire possédant à leur surface une couche relativement dense selon la définition donnée du mot "peau" dans "Standard Definitions of Terms Relating to Plastics" ASTM D 883, par opposition aux matériaux allégés dont la densité de surface est sensiblement identique à celle du coeur, sont connus. Ils sont habituellement obtenus en refroidissant énergiquement au moment de l'expansion la surface que l'on souhaite conserver dense afin de lui donner un aspect lisse; les techniques d'obtention sont largement décrites en particulier dans le brevet britannique 912 888 et les brevets des Etats-Unis d'Amérique 3 461 496, 3 764 642 et 3 879 505. Ils peuvent également être obtenus par coextrusion d'une matière thermoplastique dense servant de

2

couche de surface et d'une même matière thermoplastique allégée comme décrit dans le brevet des Etats-Unis d'Amérique 3 229 005.

De façon courante la masse volumique de la surface externe de tels produits est comprise entre 80 et 100 % de celle de la composition de base servant à fabriquer cette surface externe. Par l'expression "masse volumique de la composition de base", on entend non seulement la densité du polymère thermoplastique à l'état non allégé quand ce dernier est utilisé à l'état pour comme matière première pour la fabrication du matériau allégé du composite, mais encore la masse volumique du matériau non allégé obtenu à partir d'un polymère thermoplastique contenant des charges classiques et utilisé comme matière première à la fabrication du matériau allégé du composite.

L'essentiel pour obtenir le composite selon l'invention est la combinaison des deux moyens: monomère solvant du polymère thermoplastique allégé et densification de la surfece à unir dudit polymère allégé. L'épaisseur de la surface densifiée n'a qu'un rôle secondaire. Elle doit de préférence être la plus mince possible afin de conserver le maximum de matériau cellulaire et de l'éloigner le plus possible de la fibre neutre du matériau allégé. En pratique l'épaisseur doit être suffisante pour permettre la diffusion du monomère solvant en surface du polymère allégé sans lui permettre d'atteindre les parties plus allégées ce qui entraînerait la destruction du coeur cellulaire. Il est facile pour l'homme de métier d'adapter l'épaisseur la mieux appropriée de la surface considérée en fonction en particulier du polymère thermoplastique allégé, du monomère solvant et de se vitesse de polymérisation.

Les polymères thermoplastiques convenant à l'invention sont ceux susceptibles d'être allégés selon les moyens et les techniques connus. A titre d'exemple le produit thermoplastique peut être choisi dans le groupe comprenant le polystyrène, le polychlorure de vinyle, l'acétate de polyvinyle, les copolymeres acrylonitrile-butadiène-styrène, les polycarbonates, les copolymères styrène-acrylonitrile ou acrylonitrile-butadiène-α méthyl-styrène, le polyméthacrylate de méthyle, le polyphénylène oxyde, l'acétate, acétobutyrate et propionate de cellulose, et leurs mélanges.

Toutee les résines polyesters insaturées connues conviennent comme polymère thermodurcissable pour la réalisation du composite. Ce sont de façon générale les polycondensats préparés par réaction sur un diol d'un diacide ou d'un anhydride insaturé, comme par exemple l'acide ou l'anhydride maléique, l'acide fumarique, hexachloroendométhylènetétrahydrophtalique et autres, et plus souvent par réaction conjointe sur un diol ou un mélange de diols d'un diacide ou d'un anhydride insaturé et d'un diacide ou d'un anhydride saturé comme par exemple l'acide ou l'anhydride phtalique, les acides isophtalique, téréphtalique, adipique, tétrabromophtalique et autres. Le rapport molaire diacide insaturé sur diacide saturé de ces polycondensats est toujours supérieur à zéro. A titre d'exemple, les diols utilisés à la préparation de ces polycondensats peuvent être le propylène glycol, l'éthylène glycol, le diéthylène glycol, le butylène glycol, le pentanediol, l'heptane diol et autres, ainsi que les diols halogénés comme les diols dérivés du décachlorodiphényle, ces listes d'acides et de diols n'étant pas limitatives.

La réaction s'effectue selon les méthodes connues en présence ou non de catalyseur jusqu'au dégré de condensation desiré. On peut également utiliser comme polymère thermodurcissable les résines vinyl esters qui sont des produits de condensation de résines époxy avec des acides monocarboxyliques insaturés comme par exemple les produits obtenus par réaction de glycidyléther de bisphénol A avec l'acide acrylique ou méthacrylique. Les polycondensats obtenus sont ensuite dissous dans un monomère éthyléniquement insaturé utilisable dans la fabrication des résines polyesters insaturées. Ce monomère insaturé sert à ponter entre elles les chaînes polyesters lors de la réticulation. Ce monomère doit également être solvant du polymère thermoplastique allégé. Cette propriété lui permet de diffuser dans la surface dense du matériau allégé et lors de la réticulation de la résine polyester de polymériser à l'intérieur du matériau allégé partiellement dissous, formant ainsi un alliage au niveau de la liaison thermodurcissable-thermoplastique. Le monomère utilisable comme diluant de la résine thermodurcissable et comme solvant de la résine thermoplastique est connu, il est habituellement choisi dans le groupe comprenant les styréniques tels que styrène, méthylstyrène, chlorostyrène, tertiobutylstyrène, vinyltoluène, les mono ou diesters acryliques et méthacryliques tels que méthacrylate de méthyle, diméthacrylate 1-3 butane diol, les esters allyliques tel que diallylphtalats, les esters vinyliques tels que acétate de vinyle, proponiete de vinyle.

Bien entendu on choisit le monomère en fonction de ses propriétés solventes du polymère thermoplastique, par exemple lorsque le matériau allégé est un polymère styrénique, on choisit de préférence commé monomère un styrénique comme le styrène seul ou en mélange, ou encore pour un polychlorure de vinyle on choisit de préférence du méthacrylate de méthyle seul ou en mélange.

Aux résines polyesters on peut ajouter les adjuvants habituels tels que charges diluantes et/ou renforçantes comme des matériaux fibreux, agents antiretraits comme des résines thermoplastiques dissoutes dans le monomère, ou encore des agents ignifugeants.

Le matériau composite peut être fabriqué selon tous les procédés connus permettant de réaliser un matériau composite quelconque. On peut par exemple appliquer sur un thermoplastique allégé à surface dense une résine thermodurcissable, bien entendu diluée avec le monomère solvant, et réticuler. On peut encore le fabriquer par pressage à chaud d'un préimprégné sur le matériau thermoplastique, un préimprégné Sheet molding compound étant de façon connu une résine polyester chargée de fibres et traitée par un agent épaississant tel qu'un oxyde alcalino-terreux.

Un procédé particulièrement intéressant et objet de l'invention permet d'obtenir en continu le matériau composite. Dans l'état de la technique il ne semble pas connu d'obtenir en continu un matériau composite polymère thermoplastique allégé polymère thermodurcissable. Le procédé consiste à faire traverser une filière chauffée à une température comprise entre 100 et 200°C par un profilé thermoplastique allégé dont la surface externe est constituée d'une couche relativement dense, au sens donné dans les explications précédentes, et à mettre en contact en entrée de la filière, en tout ou partie, ladite couche relativement dense avec des fibres continues préalablement imprégnéee d'une résine thermodurcissable diluée par un monomère éthyléniquement insaturé solvant du thermoplastique allégé.

Après mise en forme finale et réticulation de la résine thermodurcissable dans la filière, le matériau composite est récupéré en sortie de filière.

La filière est de façon connue un dispositif de forme tubulaire de géométrie corrsspondant sensiblement à celle du matériau composite que l'on souhaite obtenir. Les dispositifs de chauffage sont disposés sur la filière de façon à ce qu'on puisse faire varier la température sur plusieurs zones. Ces zones de température, choisies entre 100 et 200°C sont réglées en fonction des différents autres paramètres tels que: vitesse de réticulation de la résine thermodurcissable, longueur de la filière, vitesse d'étirage du composite.

Sans être limitatif, il semble qu'une longueur de filière de 0,5 m à 1,50 m permette d'obtenir des vitesses de tirage industriellement convenables d'environ 0,5 m à 3 m/mn.

Les fibres utilisées dans le procédé se présentent sous forme continue, c'est-à-dire qu'elles possèdent toujours un lien de continuité entre l'entrée et la sortie de la filière. A titre d'exemple ces fibres peuvent se présenter sous forme de fils ou roving, de tissu ou encore de mat constitué de nappe de fibres coupées non tissées. Les fibres convenant préférentiellement à l'invention sont les fibres de verre, de carbone ou d'aremide. L'imprégnation des fibres de résines thermodurcissables en entrée de filière se fait par tout moyan connu. Elle peut se faire par exemple par bain ou trempage des fibres préalablement à leur entrée dans la filière, ou encore par un dispositif d'écoulement, tel un pot d'injection, de résine thermodurcissable placée dans une zone froide précédent la ou les zones chauffées de la filière.

La résine thermodurcissable contient au moment de l'imprégnation tous les adjuvants habituels, tels que charges, pigments, antiretraits et en particulier le système catalytiqus provoquant la réticulation ainsi qu'éventuellement un agent de démoulage.

Selon le procédé décrit il est non seulement possible de préparer des composites de grandes longueurs à partir de profilés thermoplastiques allégés préalablement préparés, mais encore de fabriquer des composites de façon totalement continue en plaçant, en sortie de chaîne d'extrusion du profilé thermoplastique allégé, la filière et le dispositif d'imprégnation des fibres. Dans ce cas il suffit d'adapter selon des essais de routine les différents paramètres pour coordonner les deux techniques. L'obtention du composite selon le procédé de l'invention paraît d'autant plus surprenant que, malgré la température de la filière, supérieure à celle de ramollissement du matériau thermoplastique allégé, de l'ordre de 80°C, on ne constate pas de déformation de l'âme en sortie de filière.

Les exemples non limitatifs suivants illustrent l'invention.

## Exemple 1

Une plaque de polystyrène allégée de messe volumique de 0,25 g/cm³ dont les deux plus grandes faces externes possèdent une masse volumique de l'ordre de 0,9 g/cm³, d'épaisseur 10 mm et de longueur x largeur de 398 x 298 mm est prise comme âme du matériau composite.

Par ailleurs on prépare un préimprégné moulable de composition suivante:

|  | parties poids |
|---|---|
| - Maléate de propylène et dipropylène glycol dilué à 68 % dans le styrène | 100 |
| - Carbonate de calcium | 100 |
| - Additif antiretrait (polystyrène en solution à 28 % dans le styrène) | 65 |
| - Kaolin calciné | 50 |
| - Peroctoate de butyl tertiaire | 1,5 |
| - Stéarate de zinc | 7 |
| - Magnésie | 1,5 |
| - Fibres de verre coupées (1 = 25 mm) | 110 |

Sur les deux plus grandes faces de la plaque de polystyrène on dispose une couche de préimprégné de 250 x 150 mm et d'environ 2,5 mm. L'ensemble est placé dans un moule de 300 x 400 mm, chauffé à 115°C. On ferme le moule en laissant monter la pression à 10 bars puis en le relachant immédiatement. Après trois minutes on ouvre le moule et récupère un composite parfaitement homogène ne montrant pas de pénétration de résine thermodurcissable à l'intérieur du matériau cellulaire.

L'épaisseur totale du composite final est de 11,3 mm avec deux couches de surface de polyester renforcé comprenant également l'alliage interfacial de 1 mm chacune. La réduction apparente de l'âme de polystyrène n'a été que de 0,7 mm.

**0 131 484**

Les propriétés mécaniques obtenues sur le composite sont les suivantes:

| | |
|---|---|
| Masse volumique | 0,5 g/cm$^3$ |
| Module de flexion | 3 500 Mpa |
| (selon norme ISO R 179) | |
| Rigidité | 8 463 306 N x mm$^2$ |
| calculée selon ALLEN | |
| "Analysis and Design of | |
| Structural Sandwichs Panels" | |
| Pergamon Oxford 1969 pour | |
| une largeur d'éprouvette de | |
| 15 mm. | |

**Exemple 2** (comparatif)

On reprend la plaque de l'exemple 1 après en avoir éliminé à la scie les parties de masse volumique voisine de 0,9 g/cm$^3$; l'épaisseur de cette plaque n'est plus que de 6,5 mm.

Après l'avoir traitée dans les conditions de l'exemple 1 on obtient finalement un matériau imparfaitement recouvert de polyester. Les parties recouvertes présentent un revêtement d'épaisseur irrégulière comprise entre 1 et 2,5 mm. On observe la pénétration de polyester dans l'âme alvéolaire dont l'épaisseur passe par endroit de 6,5 mm à 3 mm.

Ce matériau est inutilisable.

**Exemple 3**

Un profilé thermoplastique allégé, de section 28 mm x 10,6 mm, avec peau externe, est produit en continu selon la technique décrite dans le brevet français n° 1 498 620 en extrudant un mélange contenant:

| | parties poids |
|---|---|
| - Polystyrène perles-cristal | 100 |
| (masse moléculaire en poids 375 000) | |
| - Huile minérale blanche | 0,05 |
| - Bicarbonate de soude | 5 |
| - Acide stéarique | 0,1 |

Cette composition de matière plastique expansible est introduite dans une extrudeuse de diamètre 40 mm, de longueur 800 mm, équipée d'une vis ayant un taux de compression de 2,5:1 et refoulée par ladite vis à travers une filière ayant une section reproduisant sensiblement celle du profilé à obtenir, dans laquelle est maintenu un poinçon apte à créer dans la matière extrudée un espace creux interne, et, adjacent à la sortie de ladite filière et sensiblement coaxialement avec cette dernière, un conformateur constitué par un canal de longueur 1 m ouvert à ses deux extrémités, et présentant une section droite d'entrée voisine de celle de la filière et de sortie identique à celle du profilé à obtenir (28 x 10,6 mm).

Les conditions d'extrusion sont les suivantes:

| | |
|---|---|
| - Températures d'extrudeuse | 140-160 - 170° C |
| - Température de filière | 165° C |
| - Température de conformateur | 40° C |
| - Vitesse linéaire de sortie du profilé | environ 1 m/mn |
| - Densité globale du profilé | environ 0,47 g/cm$^3$ |
| - Densité de la peau | environ 0,95 g/cm$^3$ |

Derrière la ligne d'extrusion du profilé on place la filière, schématisée en annexe, de dimension 30,2 x 12,6 mm possédant deux zones de chauffage:

A d'une longueur 400 mm à 100° C
B d'une longueur 600 mm à 130° C

Précédant cette filière, en contact avec elle et de même géométrie est placé le système d'alimentation en polyester C. Ce système d'une longueur de 80 mm est maintenu à 30° C.

En sortie d'extrusion le profilé est guidé, au moyen d'une plaque de centrage D, dans la filière, tout en étant simultanément enrobé de fibres de verre continues encore appelées rovings (RO 99 P 103 de la Société VETROTEX). Le nombre de rovings est de 38.

Au fur et à mesure de l'entrée de l'ensemble profilé - rovings dans C, on injecte sur les fibres une composition polyester de formulation suivante:

| | parties poids |
|---|---|
| - Maléate de propylène glycol et de dipropylène glycol en solution dans le styrène à une concentration de 68 % | 50 |
| - Résine maléophtalate* | 50 |
| - Agent de démoulage (ORTHOLEUM 162) | 0,5 |
| - Péroctoate de butyltertiaire | 1,5 |

*La résine maléophtalate est constituée d'un mélange de:

| | parties poids |
|---|---|
| - Maléophtalate de propylène glycol | 44 |
| - Agent antiretrait (acétate de polyvinyle) | 12 |
| - Styrène | 44 |

Le matériau composite finale est tiré en sortie de filière au moyen d'une chenille de tirage.

On obtient en continu un matériau composite homogène dont l'âme allégée ne s'est pas déformée, la liaison entre le polyester et le polystyrène est assurée de façon parfaite, sans pénétration du polyester dans l'âme alvéolaire. L'épaisseur de la surface de polyester est de 1 mm et le taux de verre en poids par rapport au polyester est de 62 %.

Les propriétés mécaniques du matériau obtenu sont les suivantes:

| | |
|---|---|
| Masse volumique | : 0,62 g/cm$^3$ |
| Module de flexion | : 8 030 Mpa |
| Rigidité | : 69 298 256 N x mm$^2$ |

Si à titre comparatif, on passe dans la filière, dans les conditions ci-dessus, un profilé dont le masse volumique de la surface externe est identique à celle du coeur, on obtient un composite dont la coupe révèle un effondrement de la mousse et la pénétration de la résine polyester dans l'âme alvéolaire. Ce type de matériau est parfaitement inutilisable.

**Exemple 4**

On procède de la même façon que dans l'exemple 3 mais on injecte sur les fibres la composition résineuse:

| | parties poids |
|---|---|
| - Maléate de dipropylène glycol et de propylène glycol en solution dans le styrène à une concentration de 60 % | 100 |
| - Agent de démoulage (Ortholéum 162) | 0,5 |
| - Peroctoate de butyle tertiaire | 1,5 |

On obtient en continu un matériau composite homogène dont l'âme ne s'est pas déformée et comme dans l'exemple 3, la liaison polystyrène-polyester est parfaite.

Toutefois, dans ce cas, on observe que l'aspect de surface externe du thermodurcissable est moins lisse et moins attrayant que dans l'exemple 3.

**Exemple 5**

Un profilé thermoplastique allégé de section 28 x 10,6 avec peau externe, est produit en continu de la même façon que dans l'exemple 3, mais le composition extrudée est cette fois:

|  | parties poids |
|---|---|
| - P V C Kwert 55 | 100 |
| - Copolymère SAN à haute poids moléculaire | 8 |
| - Stéarate de calcium | 1,2 |
| - Cire de polyéthylène | 0,5 |
| - Laurate de Baryum-Cadmium | 2 |
| - Phosphite organique | 0,5 |
| - Bicarbonate de sodium | 2 |
| Température d'extrudeuse | 160 à 180°C |
| Température filière | 180°C |
| Température de conformateur | 30°C |
| Vitesse linéaire de sortie du profilé, environ | 0,8 m/mm |
| Densité globale, environ | 0,5 |
| Densité de la peau, environ | 1,3 |

On procède ensuite comme dans l'exemple 3, la composition résineuse injectée sur les fibres étant la suivante:

|  | parties poids |
|---|---|
| - Maléoisophtalate de propylène glycol et de néopentyl glycol en solution dans un mélange styrène-méthacrylate de méthyle à une concentration de 60 % (Méthacrylate de méthyle: 10 - Styrène: 30) | 100 |
| - Agent de démoulage (Ortholéum 162) | 0,4 |
| - Peroctoate de butyl tertiaire | 1,2 |

Les températures de la filière sont:
A d'une longueur de 400 mm à 100°C.
B d'une longueur de 600 mm à 110°C.
Le nombre de rovings est également de 38.
Le matériau est tiré en continu par la chenille de tirage à une vitesse de 1 m/minute.
Comme dans le cas précédent, la liaison entre le ppolychlorure de vinyle et le polyester est assurée ds façon parfaite.
L'épaisseur de la surface polyester est de 1 mm et le taux de verre en poids par rapport au polyester est de 62 %.

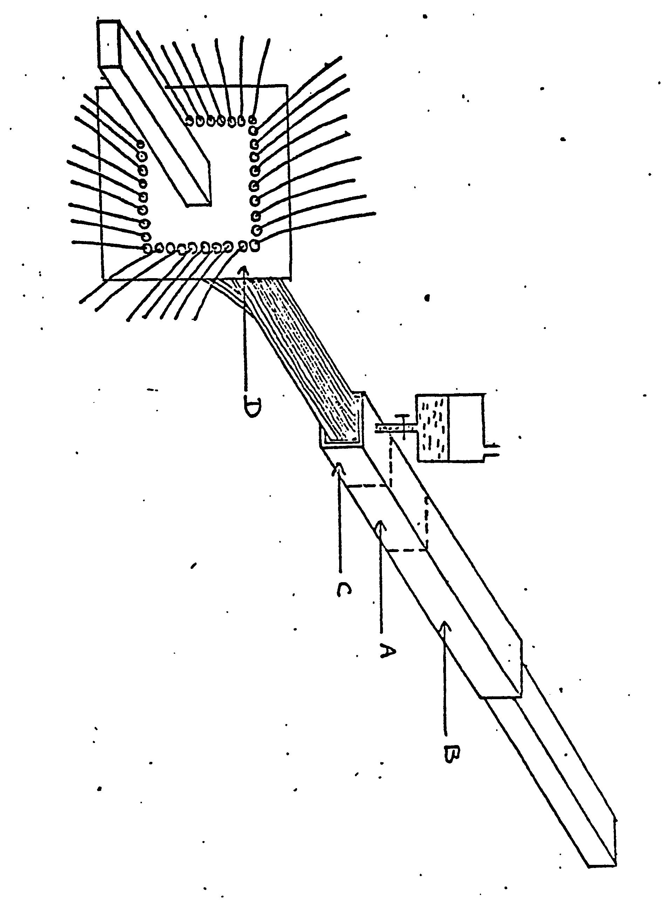

**Revendications**

1. Matériau composite possédant au moins une face externe de polymère thermodurcissable et une couche de polymère thermoplastique allégé caractérisé en ce que les deux polymères sont unis l'un d'l'autre sur toute leur interface au moyen d'un monomère diluant la résine thermodurcissable et solvant du polymère allégé dont la matière de surface externe d'unir possède une masse volumique voisine de celle de la composition de base ayant servi à sa fabrication, monomère qui lors de la réticulation de la résine thermodurcissable provoque par sa polymérisation un alliage étroit de toute l'interface des deux polymères à unir.

2. Matériau selon la revendication 1 caractérisé en ce que la surface externe à unir du polymère thermoplastique allégé poesède une masse volumique comprise entre 80 et 100 % de celle de la composition de base ayant servi à sa fabrication.

3. Matériau selon les revendications 1 à 2 caractérisé en ce que ce polymère thermodurcissable est chargé de matériau fibreux.

4. Procédé de fabrication du matériau composite de la revendication 3 caractérisé en ce qu'on fait traverser une filière chauffée à une température comprise entre 100 et 200°C par un profilé thermoplastique allégé dont la surface externe est constitué d'une couche relativement dense, à mettre en contact en entrée de filière, en tout ou partie, ladite couche relativement dense avec des fibres continues préalablement imprégnées d'une résine thermodurcissable diluée par un monomère éthyléniquement insaturé solvant du thermoplastique allégé

5. Procédé selon la revendication 4 carectérisé en ce que la couche relativement dense possède une masse volumique comprise entre 80 et 100 % de la composition de base ayant servi à sa fabrication.

7

**Patentansprüche**

1. Verbundmaterial mit mindestens einer Außenfläche aus einem hitzehärtbaren Polymeren und einer Schicht eines geschäumten thermoplastischem Polymeren, dadurch gekennzeichnet, daß die beiden Polymeren über ihre gesamte Grenzfläche miteinander mittels eines Monomeren verbunden werden, das das hitzehärtbare Harz verdünnt und das geschäumte Polymere löst, dessen zu verbindende äußere Außenflächensubstanz eine Dichte aufweist, die ähnlich derjenigen der Basiszusammensetzung ist, die zu ihrer Herstellung diente, wobei das Monomere während der Vernetzung des hitzehärtbaren Harzes durch seine Polymerisation eine enge Verbindung der beiden zu vereinenden Polymeren über ihre gesamte Grenzfläche hervorruft.

2. Material gemäß Anspruch 1, dadurch gekennzeichnet, daß die äußere zu verbindende Oberfläche des geschäumten thermoplastischen Polymeren eine Dichte zwischen 80 und 100 % derjenigen der Basiszusammensetzung aufweist, die zu ihrer Herstellung diente.

3. Material nach den Ansprüchen 1 und 2, dadurch gekennzeichnet, daß das hitzehärtbare Polymer mit einem Fasermaterial durchsetzt ist.

4. Verfahren zur Herstellung des Verbundmaterials nach Anspruch 3, dadurch gekennzeichnet, daß man ein geschäumtes thermoplastisches Profil, dessen äußere Oberfläche aus einer relativ dichten Schicht besteht, eine auf eine Temperatur zwischen 100 und 200°C erwärmte Düse passieren läßt, um am Eingang der Düse diese relativ dichte Schicht ganz oder teilweise mit endlosen Fasern in Kontakt zu bringen, die zuvor mit einem hitzehärtbaren Harz imprägniert wurden, welches mit einem ungesättigten, das geschäumte Thermoplast lösenden ethylenischen Monomeren verdünnt wurde.

5. Verfahren nach Anspruch 4, dadurch gekennzeichnet, daß die relativ dichte Schicht eine Dichte zwischen 80 und 100 % der zu ihrer Herstellung dienenden Basiszusammensetzung aufweist.

**Claims**

1. Composite material possessing at least one outer face of thermosetting polymer and a layer of reduced-density thermoplastic polymer, characterized in that the two polymers are joined to one another over their entire interface by means of a monomer which dilutes the thermosetting resin and is a solvent for the reduced-density polymer whose outer surface material, to be joined, possesses a density close to that of the parent composition used for its manufacture, which monomer, during the crosslinking of the thermosetting resin, gives rise, through its polymerization, to a tight alloying of the entire interface of the two polymers to be joined.

2. Material according to Claim 1, characterized in that the outer surface to be joined of the reduced-density thermoplastic polymer possesses a density of between 80 and 100 % of that of the parent composition used for its manufacture.

3. Material according to Claims 1 and 2, characterized in that this thermosetting polymer is filled with fibrous material.

4. Process for manufacturing the composite material of Claim 3, characterized in that a reduced-density thermoplastic section whose outer surface consists of a relatively dense layer is passed through a die heated to a temperature of between 100 and 200°C, the said relatively dense layer to be brought into contact as it enters the die, wholly or partially, with continuous fibres which have previously been impregnated with a thermosetting resin diluted with an ethylenically unsaturated monomer which is a solvent for the reduced-density thermoplastic.

5. Process according to Claim 4, characterized in that the relatively dense layer possesses a density of between 80 and 100 % of the parent composition used for its manufacture.